# EUROPEAN PATENT APPLICATION

(11) **EP 2 322 954 A2**
(43) Date of publication of application: **18.05.2011**
(21) Application number: 11001811.6
(22) Date of filing: 14.03.2003
(51) Int. Cl.: G01V 1/02, G01V 1/38

(54) **Method and apparatus for marine source diagnostics and gui for operating same**

(30) Priority: 14.03.2002 US 363984 P; 18.02.2003 US 368325; 18.02.2003 US 368699
(62) Divisional of application: 03723737.7
(71) Applicant: ION Geophysical Corporation, Houston, TX 77042-2839 (US)
(72) Inventor: Clayton, David, A., Seabrook, Texas 77586 (US); Kutty, Shyam, S., Houston, Texas 77042 (US)
(74) Representative: Jeffrey, Philip Michael

(57) **Abstract**

A graphical user interface (GUI) and control system for controlling and testing an acoustic source. The control system includes a real-time data processing of individua! source near-field measured signatures and synthesis of array far-feld signatures. The control system determines individual source out-of-specification conditions and computes far-field signatures based on an array configuration and, when applicable, excluding failed sources. Source, array, and troubleshooting information are presented to a user in real-time over a GUI monitor to allow informed decision-making regarding continued and/or modified survey operations and operational parameters.

## Description

### Background of the Invention

### 1. Field of the Invention

This invention relates generally to marine seismic surveys and more particularly to a method and apparatus for synthesizing and analyzing the output response of an airgun array and for displaying information over a graphical user interface to a user for real-time quality control of a seismic survey operation.

### 2. Description of the Related Art

In marine seismic surveying, to obtain geophysical information relating to the substrata located below the sea bottom, seismic sources, generally acoustic transmitters, adapted to produce pressure pulses or shock waves under water, are towed beneath the water surface behind a marine vessel. The shock waves propagate into the substrata beneath the sea where they are reflected back to the sea. Sensors (usually hydrophones) are used to detect the returning shock waves and to output signals Indicative of the detected wave. The signals are processed to generate useful data and to determine the geophysical structure of the substrata.

Air guns or gas guns are frequently used as acoustic transmitters. Usually, several air guns are placed in spaced relation to each other In an array. One or more air gun arrays are towed behind a marine vessel beneath the sea surface. During operation, all air guns in an array are activated simultaneously to produce a desired overall pressure pulse from that array. The pulse characteristics, such as the frequency, bubble ratio and amplitude, of the overall pressure pulse produced by an air gun array is a function of the characteristics of the pressure pulses produced by the individual air guns and the physical arrangement of the air guns in that air gun array and of each gun in that array.

Usually, a shipboard central controller controls the array, and the controller is coupled to the array by an umbilical leading out to the array. Shipboard controllers have been improved over the years to help ensure simultaneous activation (or firing) of the air guns. One such system is described in U.S. patent 4,757,482 to Fisk and having the title "Modular Airgun Array Method, Apparatus and System", the '482 patent. That patent describes an air gun control system having a central controller on the ship with a data bus leading to several sources aligned in an array and towed behind the ship. The controller of the '482 patent provides some in-water control features by the use of a plurality of local control modules that perform power conversion and are individually addressable by the shipboard central controller.

Marine seismic surveyors have several goals for managing energy source output. One goal is to maximize the energy output of the seismic source array. Another goal is to maintain the array operational characteristics within a predetermined set of specifications or limit conditions. Energy produced by a source array is maximized by maintaining the proper timing of array elements and by monitoring individual elements for out-of-tolerance conditions. The term "array" refers to multiple air guns activated simultaneously. The term "element" refers to a single air gun. The term source or acoustic source as used herein generically refers to either a single air gun or to an array of air guns.

Timing is problematic with typical source systems that control timing from the acquisition vessel. A telemetry cable that extends from the vessel to the source element acts as a filter in the system and it limits the operator's ability to precisely control element timing. Source elements that are not precisely timed will produce energy that interferes and reduces the overall array output. Moreover, data signals returning from hydrophone acoustic sensors will also suffer from the same imprecision.

System operators normally use assumptions about a source array signature when processing seismic data signals to recover the true reflectivity of the subsurface by suppressing distortions. The usual processing methods use deconvolution techniques, which are adversely affected when initial assumptions are inaccurate. Therefore, as an array output degrades due to timing or element errors, the initial assumptions become less accurate and thus reduce the reliability of the processed data signals.

Another problem with the typical prior art system is that element failure often reduces operational effectiveness. A failed source in an array adversely affects initial assumptions by changing the array combined output pulse. If detected, the operator might continue operation with a small number of failures, but this reduces data quality. Also, the operator might install spare elements in the array to activate subsequent to the failure, but this adds cost to the survey operation. Ultimately, the operator might be forced stop production to retrieve and repair the source array, resulting in significant efficiency losses.

These and other problems with the typical seismic survey system create a need for an apparatus and method for determining real-time an array health status from which the operator can make an informed real-time decision for continuing a survey with a failed element. As used herein, the term real-time means any course of action or activity during a seismic survey.

The typical system also suffers from an inability to provide information useful in predicting system response given a potential failure. Therefore, the need exists for predictive array synthesis that takes element failure into account. Such array synthesis will allow an operator to predict array performance with one or more elements removed from the array and to determine if the array would remain within specifications given the removed elements.

Yet another problem associated with the typical system is that the operator needs an improved interface for effectively controlling the array in view of potential failures. Current seismic survey systems do not provide a graphical user interface having real-time status reporting, quality control reporting, or troubleshooting tips for use during the survey.

### Summary of the Invention

The present invention addresses the above-identified drawbacks by providing a seismic data acquisition system having improved graphical user interface, prediction control through array synthesis, and real-time source monitoring and correction.

In one aspect of the invention a method of testing an acoustic source during a seismic survey operation comprises creating a baseline signature of the acoustic source, creating a second signature from the acoustic source during the seismic survey operation, and comparing the second signature to the baseline signature, the comparison being used at least in part in determining a course of action.

The baseline signature represents one of a measured near-field air gun output or a synthesized far-field array output based on predetermined initial parameters. When the baseline signature represents a near-field output, the second signature preferably represents a near-field output. When the baseline signature is a synthesized far-field signature, the second signature is a synthesized far-field signature based on survey derived parameters. The signatures can be in a time domain and/or a frequency domain.

Another aspect of the invention is a method of testing an acoustic source during a seismic survey comprising generating a near-field signature (acoustic or pressure gradient) using the acoustic source and storing the near-field signature as a baseline signature. A far-field signature is synthesized using predetermined initial parameters. The method includes generating a second near-field signature during the seismic survey using the acoustic source, synthesizing a second far-field signature using survey derived parameters, comparing the second near-field signature the baseline signature during the survey, comparing the second synthesized far-field signature to the first synthesized far-field signature to the first far-field signature, and determining a course of action based at least in part on one of the comparison of the near-field signatures and the comparison of the synthesized far-field signatures.

Yet another aspect of the present invention is a method of testing an acoustic source during a seismic survey comprising synthesizing a first far-field signature using predetermined initial parameters such as depth, pressure temperature, and timing expected during the survey. Then the method includes activating the acoustic source to conduct the seismic survey, synthesizing a second far-field signature using survey derived parameters, comparing the second far-field signature to the first far-field signature, and determining a survey course of action based at least in part on the comparison.

Another aspect of the present invention is an apparatus for testing an acoustic source during a seismic survey operation, comprising a sensor to sense a first output of the acoustic source and a second output of the acoustic source during the seismic survey. The apparatus incudes a memory device for storing a baseline signature representative of the first sensed output, and a processor executing instructions according to one or more programs stored in the memory device for comparing a second signature representative of the second sensed output to the baseline signature, the comparison being used at least in part in determining a course of action during the seismic survey.

Still another aspect of the present Invention is an apparatus for testing an acoustic source during a seismic survey operation, comprising a controller controlling the acoustic source, a memory device in the controller for storing a baseline signature representative of the acoustic source output and a second signature representative of a subsequent output of the acoustic source, and a processor executing instructions according to one or more programs stored in the memory device for comparing the second signature to the baseline signature, the comparison being used at least In part in determining a course of action during the seismic survey.

The present invention further provides a seismic data acquisition system having improved graphical user interface, prediction control through array synthesis, and real-time source monitoring and correction.

A seismic survey information presentation device is provided for use with a seismic survey system including one or more acoustic sources. The device includes a computer having a processor for processing information according to one or more programs, a display device for displaying the processed information, an information input device for providing a user entry point into the information presentation device, the processor, display device and information Input device being a graphical user interface, one or more sensors associated with the seismic operatively coupled to the computer for transferring real-time survey information to the computer, and a plurality of modules in the computer for comparing survey derived parameters relating to an acoustic source signature to predetermined parameters relating to the acoustic source, wherein the comparison is reported to a user on the display during the seismic survey, the comparison being used at least in part in determining a course of action.

In another aspect a baseline signature represents one of bubble period, bubble amplitude and frequency and a real-time comparison is made based on real-time measurements.

The baseline signature can be a measured near-field air gun output or a synthesized far-field array output based on predetermined initial parameters. When the baseline signature represents a near-field output, the second signature preferably represents a near-field output. When the baseline signature is a synthesized far-field signature, the second signature is a synthesized far-field signature based on survey derived parameters. The signatures can be in a time domain and/or a frequency domain.

Still another aspect of the present invention is a troubleshooting module in the plurality of modules. The troubleshooting module uses the comparison in determining an out-of-tolerance condition and provides pre-planned troubleshooting tips to the user in real-time to aide in determining the next course of action.

### Brief Description of the Drawings

The novel features of this invention, as well as the invention itself, will be best understood from the attached drawings, taken along with the following description, in which similar reference characters refer to similar parts, and in which:
**Figures 1A** and **1B** show a marine seismic data acquisition system according to the present invention;
**Figure 1C** is a system block diagram that represents the system of **Figures 1A** and **1B****;**
**Figure 1D** shows a computer system used for the GUI of the present invention;
**Figure 2** is a block diagram of an embodiment of the remote control module of the present invention;
**Figure 3** is a block diagram to show in greater detail the in-water components used in the system of **Figure 1****;**
**Figure 4** is a plot of a typical air gun response; .
**Figures 5A** and **5B** show a flow diagram of a method according to the present invention;
**Figure 6** is an acoustic source far-field signature (FFS) shown in the time domain;
**Figure 7** is an acoustic source far-field signature (FFS) shown in the frequency domain; and
**Figures 8A-8B** show a data flow diagram of a GUI control system according to the present invention.

### Detailed Description of the Invention

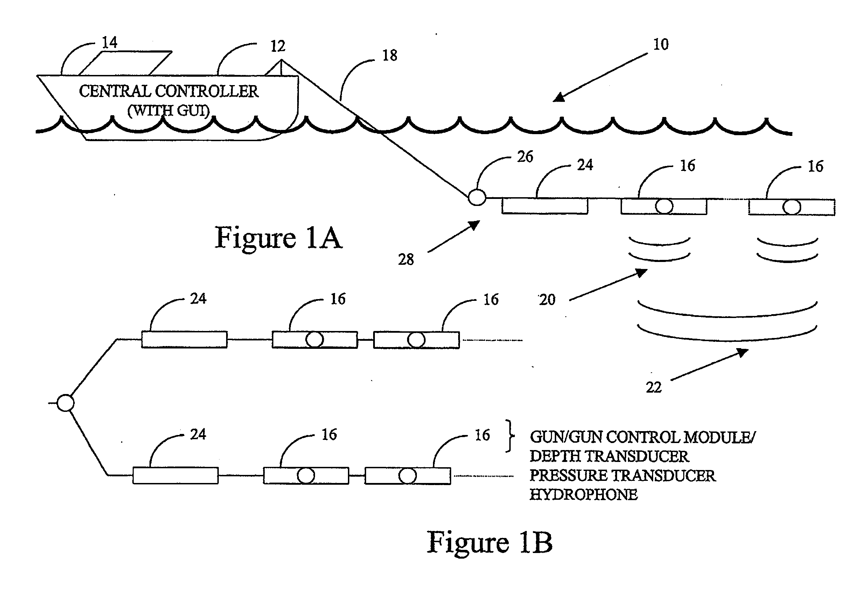

**Figures 1A** and **1B** show a marine seismic data acquisition system **10.** Shown is a tow vessel **12** that includes a central controller **14.** As described later, the controller **14** includes a computer and graphical user interface. An air gun array **28** is coupled to the vessel by a reinforced cable **18** and known coupling **26.** The cable 18 includes conductors for coupling the array sources to the central controller. The array comprises several individual acoustic sources **16.** When activated, each source produces an air bubble **20,** and the individual sources are activated such that the several air bubbles coalesce to form a substantially singular acoustic wave **22.** An in-water remote control module **24,** which will be further described later, preferably controls each array string.

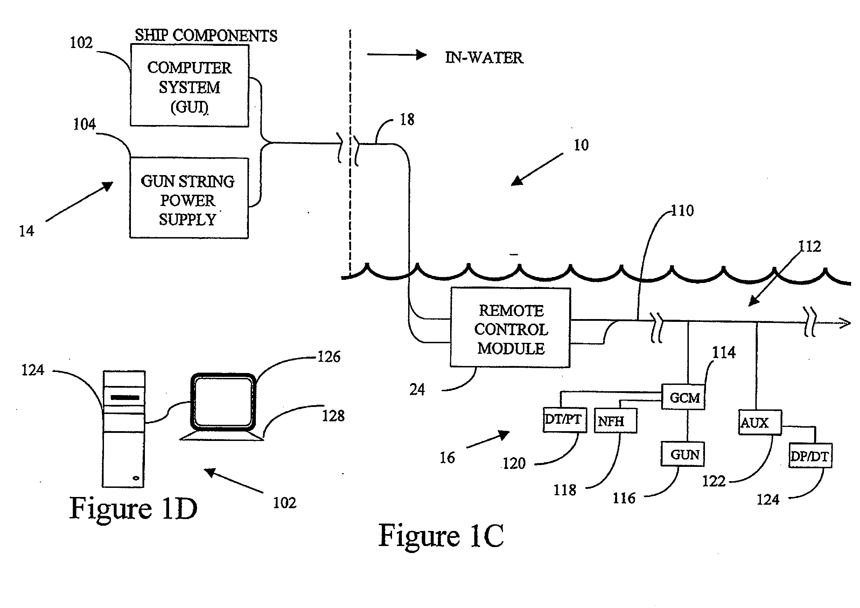

As shown in **Figure 1B****,** each source comprises several components according to the present invention. Shown are two substantially identical source array strings. Each string includes preferably only one remote control module **24** the array string. Referring to **Figures 1B** and **1C****,** a source element includes a gun control module **114** for controlling the individual source, a hydrophone sensor **118** for acquiring a near-field response from each source, a depth transducer for acquiring depth information, and a pressure transducer for acquiring pressure information. The depth and pressure transducers being shown collectively as a DT/PT module **120.**

The central controller **14** includes a memory unit (not separately shown) for storing baseline element signatures as well as signatures acquired during the seismic survey. For the purposes of this invention a signature is a signal indicative energy associated with an air gun output or with an array output. The signal can be measured or synthesized. A graphical user interface according to the present invention is included for allowing an operator to view system and element status and for commanding the system from the vessel. As used herein, an element signature means Information representative of a source element response characteristic. The signature can be a single source signature or the signature can be a combination of signatures from an array of single sources. The signature can be a near-field signature or the signature can be a far-field signature. Furthermore, the signature can be measured, computed or synthesized using methods according to the present invention.

**Figure 1C** is a system block diagram that represents the system **10** of **Figures 1A** and **1B****.** The system includes out-of-water (or shipboard) components and towed in-water components. Shipboard components include a graphical user interface (GUI) computer **102** and a power supply **104.** The use of the term "shipboard components" is for simplicity and not indicative of a requirement that any particular component be on a ship. For example, one aspect of the present invention Includes a network interface that transmits seismic data to a remote location such as in a land-based office to be viewed on a GUI monitor. The power supply **104** is preferably a known supply used for converting alternating current (ac) power to direct current (DC) power.

The Interface **102** and power supply **104** are coupled to in-water components via the umbilical **18.** The umbilical **18** is connected to the array **28.** The remote control module **24** is coupled via a second umbilical **110** to one or more source elements **16.**

In a preferred embodiment, the shipboard interface communicates with a navigation system and provides global synchronization to in-water components to be described later. The shipboard interface provides a data collection point for source array elements and peripheral sensors, and it provides an operator entry point for control of source array elements.

The array **18** includes a plurality of air gun control modules **114** (only one is shown for simplicity), and each gun control module is connected to and controls at least one air gun **116.** The gun control module (GCM) is also connected to one or more near field hydrophones **118** and one or more depth/pressure transducers **120** (DT/PT modules). The array may include an optional auxiliary unit **122** when additional DT/PT modules are desired.

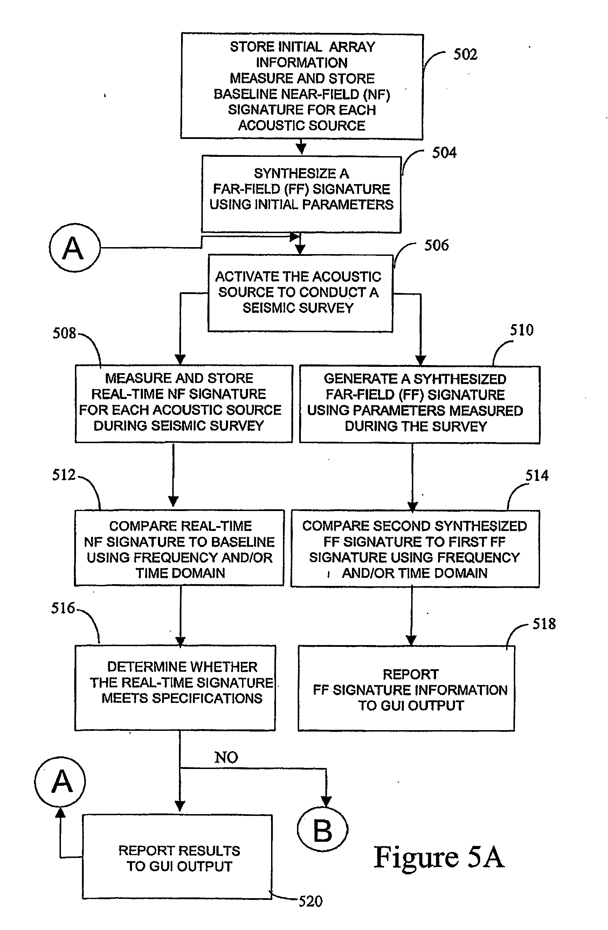

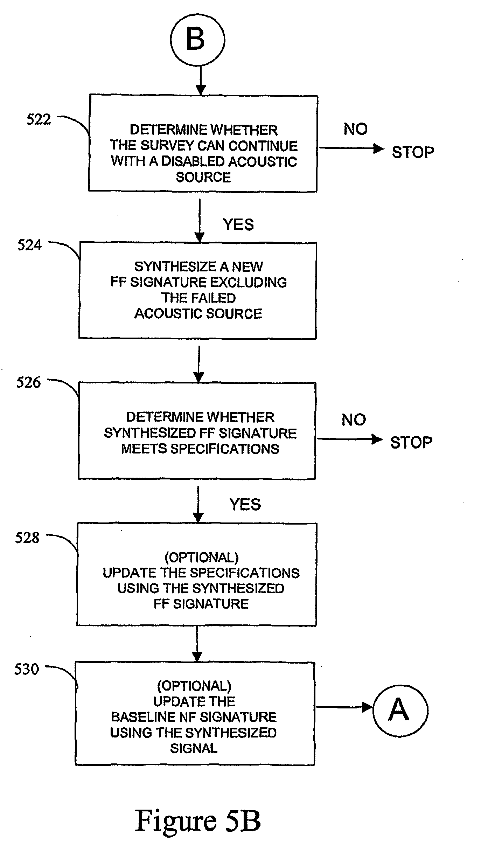

**Figure 1D** shows a one embodiment of the computer and the GUI of the central controller **14** of the present invention. The central controller preferably includes a computer **124,** a monitor **126** and a keyboard **128.** As in most typical computers, the computer **124** includes an internal processor, memory devices for storing information obtained during the survey and for storing one or more programs having instructions for use by the processor. The processor is preferably used to synthesize signals and to compare synthesized signals as well as to analyze and compare measured signals received during the survey. These aspects of the present invention will be further described herein with respect to Figure 5.

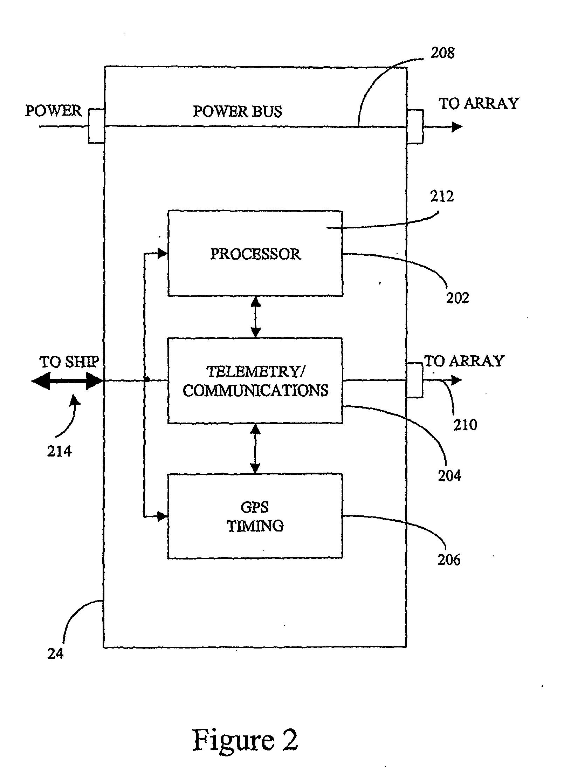

**Figure 2** is a block diagram of the remote control module (RCM) **24** used as part of system **10** described above and shown in **Figure 1C****.** The RCM **24** includes a processor 202, a telemetry communication module **204** and an optional global positioning system (GPS) timing signal receiver **206.** In a preferred embodiment, DC power is generated on ship using the power supply **104** as described above and shown in **Figure 1****.** The RCM **24** preferably passes the DC power using a power bus 208, and the power bus 208 distributes the DC power along the array.

The RCM processor **202** may be any number of known processors and may include a memory module **212** for storing received parameters and data. The processor **202** is coupled to the telemetry module **204.** The processor is coupled to the GPS signal receiver **206** for use when precise positioning is necessary as will be discussed later. The telemetry module is coupled to the shipboard interface **102** via a communications link. The telemetry module **204** is also coupled to the processor **202** and GPS receiver **206.** All internal couplings are typical electrical couplings known in the art.

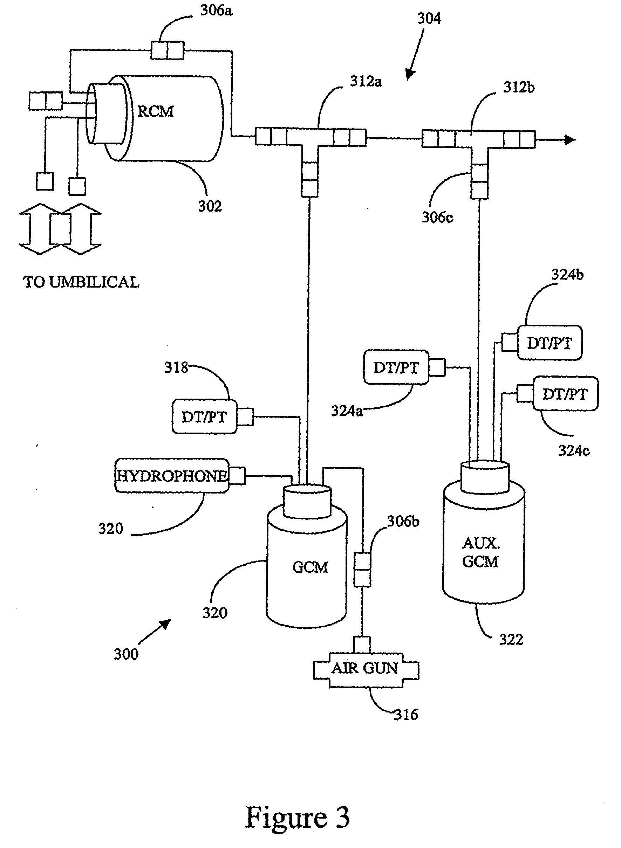

**Figure 3** is a block diagram to show in greater detail a preferred arrangement of the in-water components used in the system of **Figure 1****.** The several components shown in **Figure 3** are referred to collectively as the towed subsystem 300. The towed subsystem **300** includes a remote control module (RCM) **302** substantially identical to the **RCM 24** described above and shown in **Figures 1** and **2****.** The RCM **302** is coupled to an array **304** using any suitable connector **306a** to connect an array umbilical **308.** The array umbilical **308** couples the RCM **302** to a plurality of branches **310a-310b** using known T-connectors or any other suitable known connector.

A gun branch **310a** includes a gun control module (GCM) **314.** The GCM **314** is coupled to a known air gun **316.** The GCM **314** is coupled to a depth/pressure transducer module **318.** The GCM is coupled to a hydrophone **320.**

Each GCM is a distributed controller for source array elements. Each GCM includes digitizing circuitry for digitizing signals at or near the acoustic source location. This local digitization reduces adverse noise effects and increases upstream processing capability. In a preferred embodiment, each GCM is used to digitize signals from peripheral sensors elements such as the DT/PT modules.

Each GCM provides power to the source element and acts as a single bus between control units and all source elements, which reduces the number of conductors required for operation.

An auxiliary branch **310b** is used to expand the capabilities of the gun branch **310a.** As such, the auxiliary branch is completely optional. When used, the auxiliary branch **310b** preferably includes an auxiliary GCM **322.** The auxiliary GCM is coupled to one or more depth/pressure transducer modules **324a-c.** The auxiliary GCM is similar to the GCM in that the auxiliary GCM operates to digitize output signals from the auxiliary branch peripheral sensor elements such as the DT/PT modules **324a-c.**

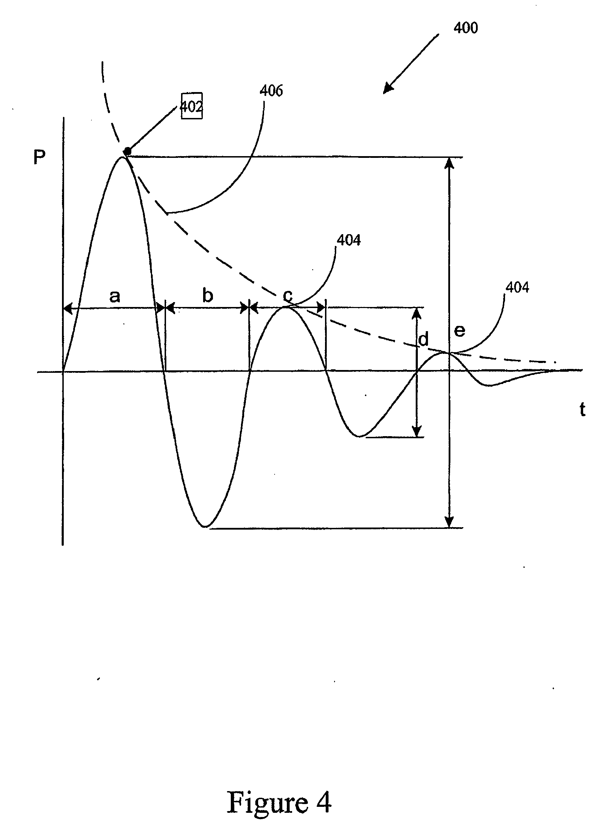

Referring now to **Figures 4-8** and utilizing the embodiments described above and shown in **Figures 1A-3****,** real-time acoustic source testing embodiments and graphical user interface (GUI) embodiments according to the present invention will be discussed.

**Figure 4** is a graphical representation of a typical air gun response shown as amplitude plotted against time. When an air gun is activated, a peak amplitude **402** is usually exhibited followed several successively decaying peaks, or so-called bubble amplitude peaks **404.** An air gun operating within normal parameters will usually exhibit an asymptotic peak decay curve shown as a dotted line **406.** The curve is a diminishing sinusoid with a period T **408** being, for example, (a + b) or (b + c). The positive peak amplitude is typically indicative of a direct output while the negative peak amplitude typically includes surface reflection energy usually present in the measurement. Those skilled in the art understand the effect of reflection energy on peak-to-peak measurements and understand how to compensate measured data. Thus, the terms peak and peak-to-peak might sometimes be used interchangeably. A measured response characteristic that deviates significantly from the typical response curve might be indicative of problems with the air gun, the receiver hydrophone or both. For example, a wide variation in the period T is usually indicative of a problem with the air gun, whereas a variation in the amplitude response can be indicative of a problem with the gun or the hydrophone or both.

Since the problem cause is sometimes difficult to determine, the typical operations procedure would have the survey halted to replace the air gun and/or the hydrophone. This is because the typical system does not provide any indication as to the acceptability of continuing the survey with a failed gun and/or hydrophone. If the operator simply continues the survey, there is no measure or guarantee of the accuracy of the future survey data, thus diminishing the value of the survey.

The present invention provides a real-time test apparatus and procedure that uses a known response in conjunction with real-time measurement for determining the effectiveness of the array with a failed gun and or gun/hydrophone pair. Each air gun in the array of the present invention is initially tested to create an initial response characteristic signature such as the response shown in **Figure 4****.** The signature is known as a near-field signature, and is used for the purposes of the present invention. Preferably, the hydrophones used in the array are used in measuring individual air gun signatures. The signatures are stored as near-field baseline data in the memory device for later comparison to real time responses from the air gun elements as will be discussed in more detail later.

The initial measured air gun response provides information about the health and performance of the air gun when compared to an ideal. The response of each air gun is preferably represented in the time domain as shown. A period of each response is determined and archived for later comparison to real-time response signals. Changes in the response period tend to indicate a problem with the air gun. The initial archived signal also includes peak amplitude. Real-time response signals are compared for peak amplitude variations. Amplitude exceeding acceptable operational limits (maximum or minimum) tends to indicate a problem with the hydrophone or air gun.

**Figures 5A-5B** show a method according to the present invention that provides concurrent near field quality control and far field signature synthesis during a seismic survey. The flow shown is for ease of explanation and is not intended as limiting the invention to any particular order of steps.

The method begins by storing initial Information in the central controller for use in later comparisons and by activating each element to measure and store a baseline near-field (NF) signature for each element **502.** The initial information preferably includes the particular seismic survey array configuration, e.g., number of strings, number of guns per string, gun identifier etc... The information preferably includes tolerance information derived from component specifications as well as particular customer requirements. Other useful information used for synthesizing far-field (FF) signals and for NF and FF signal comparisons include gun volume, timing, temperature, depth, atmospheric pressure, water pressure, and the like. The initial information is based on expected values for these parameters, while sensors as described above are used to acquire real-time information relating to the same parameters. The present invention contemplates as initialization information as being any desired Information to be used to compare survey information for quality or to compare any component or subsystem operating parameter for quality.

A far-field (FF) signature (signal) is synthesized **504** based on the actual array configuration and on initial parameters and assumptions above. The synthesized FF signature is stored for later comparison to real-time synthesized FF signatures derived during the seismic survey using the measured parameters and constant known parameters.

The survey begins by activating all sources 506 as is typical in the art. At each activation, commonly referred to as a "shot", a new NF signature is acquired **508** using near field hydrophones. Information associated with the shot is acquired. This survey derived information is acquired through in-water sensors, e.g., the DT/PT **120,** temperature sensors, atmospheric sensors, GPS devices, etc... Other information relating to the array configuration and individual hydrophones is acquired and stored in the central controller memory for processing.

The newly acquired NF signatures (signals) are compared to the NF baseline, and a new FF signature is synthesized **510,** based on the information acquired during the survey.

Preferably in a concurrent fashion, the newly-acquired NF signatures are compared with the baseline signatures and the new FF signature **512** is compared to the original FF signature **514.** The NF signatures are preferably compared in the time domain for comparing amplitude peaks and zero crossings with the baseline signatures for the corresponding source. Additionally, the NF signature is compared in the frequency domain by measuring the first harmonic of the signature and comparing the measured first harmonic with the first harmonic of the baseline signature of the corresponding source. Substantially similar comparisons are conducted with the FF synthesized signature and the stored FF signature.

The FF signature comparison is then reported **518** via the GUI monitor in substantially real-time, while further processing is performed on the measured NF signatures.

The method includes determining whether the each source is operating within predetermined specifications **518,** based on the compared frequency and/or amplitude comparisons relating to the NF signatures. If all comparisons show that the guns are operating within specification, then the survey can continue with the comparison results being reported 520 via the GUI monitor.

When any particular acoustic source is not operating within specification, the method of the present invention allows for real-time assessment of continued operations with one or more failed acoustic sources. The newly-measured signatures are used to determine the survey can continue without using the failed sources **522.** In this case, the new FF signature is synthesized **524** using the information as described above and with array configuration information revised to exclude the failed elements. The new synthesized FF signature is compared to FF signature specifications **526** and to the previously synthesized FF signature for real-time informed decision-making regarding continued operations. In some cases, the new synthesized signature might indicate that the missing sources will not adversely affect the quality of the survey, and the survey can continue by not activating the failed sources. In other cases, the new synthesized signature might indicate that further survey operations are not advisable due to expected poor quality.

In some cases, the NF comparison and FF comparison (with or without excluded elements), might show array drift. Array drift is a known condition whereby substantially all acoustic source NF signatures are altered in generally the same way. It is possible that some or all of the sources fail a specification, but the synthesized FF signature might indicate that useful data can be acquired by continued operations. In this case, the user has the option to update the specifications **528** and/or NF baseline signature using the new synthesized FF signature taking into account the drift conditions. This allows the survey to continue with the change in specifications being recorded for later evaluations. When this option is selected, the baseline signature 530 and associated specifications can be updated in real-time without halting the survey and retrieving the array.

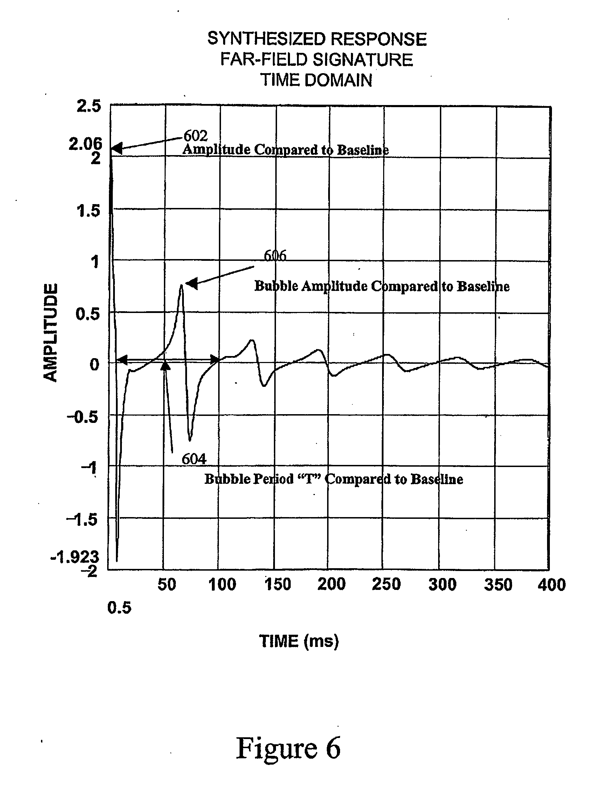

**Figure 6** represents a synthesized far-field response signature generated by the method of the present invention as described above and shown in **Figures 5A-B**. The response is shown in the time domain to illustrate certain comparisons made using the method. The far-field source peak response 602 is compared to the initial FF response signature synthesized prior to beginning the seismic survey. In addition to the peak response, the signature period "T" **604** and bubble amplitude **606** are concurrently compared to the corresponding baseline parameters. The curve, comparisons and any detected error are recorded and reported to the user in real time using the monitor of the GUI controller according to the present invention. In this manner, the user can determine from the signature response and displayed messages, whether the far-field signature meets specifications or whether the survey should be halted.

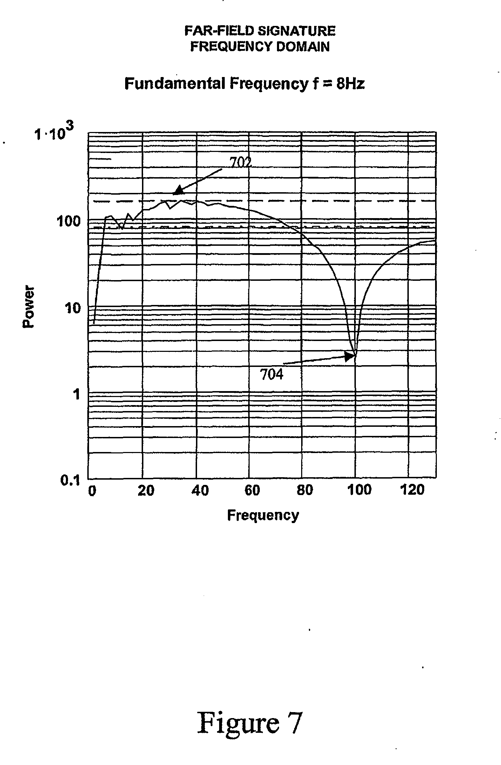

**Figure 7** represents a synthesized far-field response signature generated by the method of the present invention as described above and shown in **Figure 5****.** The response is shown in the frequency domain to illustrate certain comparisons made using the method. Using the frequency domain allows for comparing far field power magnitude **702** and power spikes **706** to corresponding power/frequency specifications determined at the beginning of the survey. The comparison is useful, in determining quality of the far field signatures in real-time.

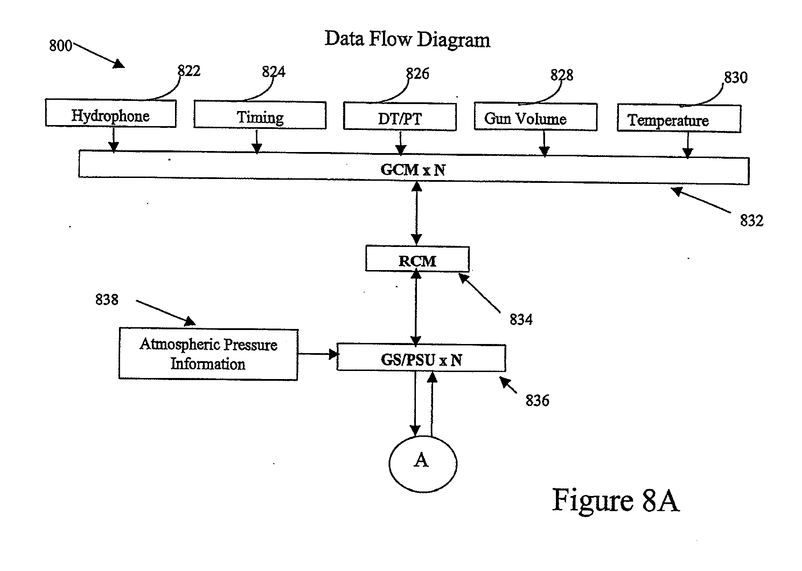

**Figures 8A-8B** show a data flow diagram **800** of a GUI according to the present invention to illustrate a preferred method of information flow and display using a controller and quality control (QC) apparatus according to the present invention. References to the apparatus described above and shown in **Figures 1A-3** are made to simplify the discussion. Those skilled in the art and with the benefit of the present disclosure would recognize the availability of several commercial configurable software products that might be programmed with instructions to carry out the method of information flow and display according to the present invention.

For the purposes of this disclosure a graphical user interface (GUI) is used to mean either a device for allowing a human to interact with a seismic survey system or a set of programmed instructions to be carried our by a computer processor to receive commands from a user through an input device and to provide a graphical output to a user over a display. The term module as used with the GUI described below means a subset of programmed instructions to perform a specified function. The term screen as used with the GUI described below means a set of programmed instructions to provide a graphical output over a display, the output being representative of the function described.

The survey system **10** is initialized with information entered into an Array Configuration and Tolerance Input Page 802 preferably using a GUI input device such as a computer keyboard, scanner, download, or the like. The information preferably includes the particular seismic survey array configuration, e.g., number of strings, number of guns per string, gun identifier etc... The information preferably includes tolerance information derived from component specifications as well as particular customer requirements. The present invention contemplates as initialization information as being any desired information to be used to compare survey information for quality or to compare any component or subsystem operating parameter for quality. For the purposes of this invention, the terms "quality" and "quality control" are used and generally used in the art. That it, the terms relate to whether a particular parameter is determined to meet acceptable specifications.

Initialization information is then transferred to modules In the GUI controller **102** of **Figure 1C****.** The controller information is arranged in a controller group **840** and a source quality group **842.** The source quality group is further shown as a near field quality and comparison group **844** and a far field quality and synthesis group **848.** Tolerance information is transferred to an archive module **804** as baseline information and to an error detection module 806. Information relating to array configuration is transferred to the archive module **804,** and to an array configuration module **808,** which is used in real-time far-field signature display and reporting. The initialization information is also transferred to an Array Timing Correction Module **810,** used for shot timing control.

Initialization information is preferably available to a user on a GUI monitor in the form of information pages. The baseline information and tolerance settings are displayed globally on an overview page **812.** Initial information might also be displayed as string information on a per-string information page **814,** and gun information can be displayed on a single-channel high-definition page **816.**

The baseline information is transferred from the archive module **804** to a Sensor QC and Comparison Module **818** for use during real-time near-field quality control.

Once the system is initialized with user input information as described above, initial measured information comprising near-field signature information is transferred as baseline information in the archive module **804,** in the error detect module **806,** in the Sensor QC and Comparison module **818** and to the array timing and correction module **810.** All of which information is displayable to the user on the GUI monitor as a Sensor QC page **820.**

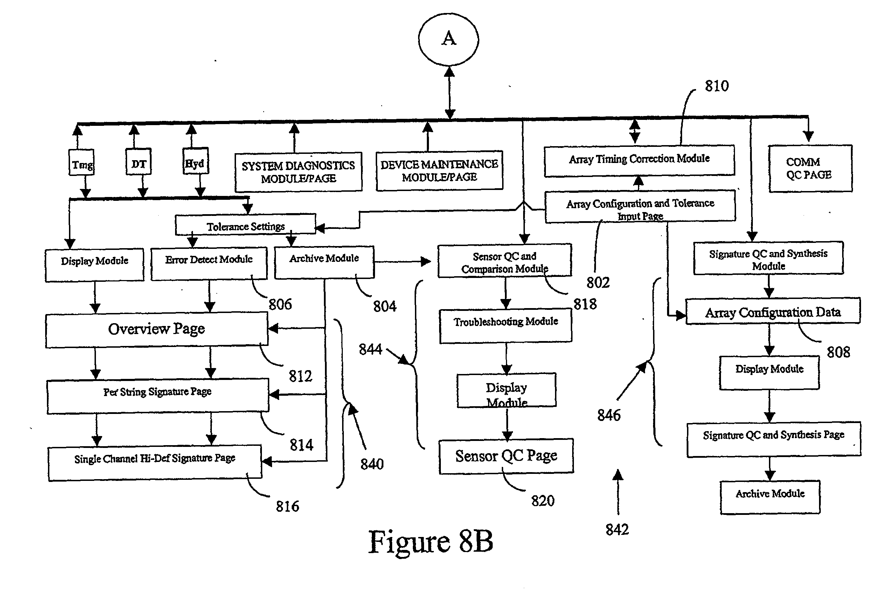

During each shot, information acquired by the various sensors described above and shown in **Figure 3** preferably flows according to **Figures 8A** and **8B****.** Hydrophone information **822,** timing information **824,** depth and pressure information **826,** gun information **828** and temperature information **830** flow to the gun control module **320** and is collectively referred to as GCM information **832.** GCM information also includes information such as commands and GPS timing signals flowing to the GCM **302** from the GUI controller. **102.** Information from several gun control modules and auxiliary control modules flow to the RCM **302** and is collectively referred to as RCM information **834.** RCM information **834** also includes information such as commands flowing to the GCM and other information desirable in controlling the string.

Information regarding each shot flows as RCM information to a recording room as GS/PSU information **836.** Atmospheric pressure Information **838** is preferably acquired at the time of each shot using known acquisition devices and methods. The atmospheric pressure Information **838** includes the atmospheric pressure occurring at the time, and in the location of the shot. The information is transferred to the GS/PSU for recording along with the GCM information **832** and the RCM information **836** for later review and analysis.

The GS/PSU information **836** is also transferred to the controller **102** for real-time near-field signature QC, and for concurrent far-field signature synthesis and reporting as discussed above and shown in the flow of **Figures 7A-7B.**

The hydrophone, depth and pressure data go into the Sensor QC and Comparison Module for the diagnostic tests described above in **Figure 2** and those results go into the Troubleshooting Module for evaluation of out-of-tolerance conditions. The raw data also go into the signature QC and Synthetic Module along with the array configuration for generation of array synthetics.

Data, such as information relating to individual sources, multiple sources along a string and complete array information are used in real-time quality control and source evaluation.

Referring to **Figures 6** through **8B** the information used and/or obtained during the survey are presented to the operator or other personnel using a plurality of modules in the computer for comparing survey derived parameters relating and the acoustic source signature to predetermined parameters relating to the acoustic source. The comparison is reported for amplitude bubble period and frequency to a user on the display, the comparison being used at least in part in determining a course of action. A course of action might be pulling in the system for repair, continuing the operation next shot, or continuing the operation and modifying the parameters to take into account deviations determined using the comparison.

For amplitude, using a time series signature, as described in **Figure 6****,** a comparison is made of the peak-to-peak **602** signature, reporting any user defined out of tolerance observations.

For bubble period, using a time series signature, as described in **Figure 6****,** a comparison is made of the bubble period **604** signature. The comparison is reported to the user along with user defined out of tolerance observations.

For frequency, using frequency information derived from a time series signature, a frequency observation described in **Figure 7** is generated. Comparisons are made based on the area beneath the frequency curve **702A** and **704A,** for all points greater than -6 dB. User defined out of tolerance observations are reported.

The foregoing description is directed to particular embodiments of the present invention for the purpose of illustration and explanation. It will be apparent, however, to one skilled in the art that many modifications and changes to the embodiment set forth above are possible without departing from the scope of the invention. It is intended that the following claims be interpreted to embrace all such modifications and changes.

## Claims

1. A seismic survey information presentation device for use with a seismic survey system including one or more acoustic sources, the device comprising:
(a) a computer having a processor for processing information according to one or more programs;
(b) a display device for displaying the processed information;
(c) an information input device for providing a user entry point into the information presentation device, the processor, display device and information input device being a graphical user interface;
(d) one or more sensors associated with the seismic survey system operatively coupled to the computer for transferring real-time survey information to the computer;
(e) a plurality of modules in the computer for comparing survey derived parameters relating to an acoustic source signature to predetermined parameters relating to the acoustic source, wherein the comparison is reported to a user on the display during the seismic survey, the comparison being used at least in part in determining a course of action.

2. A device as claimed in claim 1, wherein the comparison is of a baseline source output amplitude to a real time source output amplitude.

3. A device as claimed in claim 1, wherein the comparison is of a baseline source output bubble period to a real-time source output bubble period.

4. A device as claimed in claim 1, wherein the comparison is of a baseline source output frequency to a real-time source output frequency.

5. A device as claimed in claim 2, wherein the baseline source output amplitude and the real-time source output amplitude are each a time-series signature and the one or more programs include a program comparing a peak-to-peak parameter of the time-series signature and a program for reporting when an out of tolerance condition is determined.

6. A device as claimed in claim 3, wherein the baseline source output bubble period and the real-time source output bubble period are each a bubble period signature and the one or more programs include a program for comparing the bubble period signatures and a program for reporting when an out of tolerance condition is determined.

7. A device as claimed in claim 4, wherein the baseline source output frequency and the real-time source output frequency are each a time-series signature and the one or more programs include a program for comparing an area beneath a frequency curve for all points greater than a predetermined value, the one or more programs further including a program for reporting when an out of tolerance condition is determined, wherein the predetermined value is about -6dB.

8. A device as claimed in claim 1, wherein the plurality of modules includes a controller group and a source group.

9. A device as claimed in claim 1, wherein the plurality of modules includes a near-field quality and comparison module group and a far-field quality and synthesis module group.

10. A device as claimed in claim 1, wherein the plurality of modules includes a sensor quality and comparison module used to compare survey derived information relating to individual acoustic sources to baseline information relating to the individual acoustic sources received from an archive module.

11. A device as claimed in claim 1, wherein the plurality of modules includes a troubleshooting module and a display module, the troubleshooting module containing a suggested course of action to take upon the existence of failure, the suggested course of action being displayed to a user on the display device using a display module.

12. A device as claimed in claim 1, wherein the survey derived parameters include one or more of gun volume, timing, temperature, depth, atmospheric pressure, an water pressure, the survey derived parameters being acquired during the seismic survey.

13. A device as claimed in claim 1, wherein the plurality of modules includes a response characteristic synthesis module in the computer system for synthesizing a response characteristic based at least in part on at least one disabled acoustic source in a source array.

14. A device as claimed in claim 1, wherein the plurality of modules includes a troubleshooting module containing messages relating to one or more out-of-specification conditions, said messages being displayed on the display device when said one or more out-of-specification conditions exists.

15. A device as claimed in claim 1, further comprising a source controller for controlling the one or more acoustic sources, the control being based in part on the comparison.
